# EUROPEAN PATENT SPECIFICATION

(11) **EP 4 005 039 B1**
(45) Date of publication and mention of the grant of the patent: **12.06.2024**
(21) Application number: 20845888.5
(22) Date of filing: 31.07.2020
(51) Int. Cl.: H01S 3/063, H01S 3/02, H01S 3/094, H01S 3/16, H01S 3/23, H01S 3/083, H01S 3/1112, H01S 3/00

(54) **CHIP-INTEGRATED TITANIUM:SAPPHIRE LASER**
CHIPINTEGRIERTER TITAN:SAPHIR-LASER
LASER À TITANE:SAPHIR INTÉGRÉ À UNE PUCE

(30) Priority: 31.07.2019 US 201962881174 P
(43) Date of publication of application: 01.06.2022
(73) Proprietor: The Board of Trustees of the Leland Stanford Junior University, Stanford, CA 94305-2038 (US)
(72) Inventor: AHN, Geun, Ho, Stanford, CA 94305 (US); LUKIN, Daniil, M., NY 11733 (US); GUIDRY, Melissa, Stanford, CA 94305 (US); VUCKOVIC, Jelena, Palo Alto, CA 94301 (US); YANG, Kiyoul, San Francisco, CA 94107 (US)
(74) Representative: FRKelly
(86) International application number: PCT/US2020/044560
(87) International publication number: WO 2021/022188

(56) References cited:
- DE-A1-102017 111 938
- US-A- 5 231 643
- US-A1- 2004 208 543
- US-A1- 2017 212 285
- US-B2- 6 836 592
- US-B2- 6 836 592
- GRIVAS C ET AL: "Single-transverse-mode Ti:sapphire rib waveguide laser", OPTICS EXPRESS, vol. 13, no. 1, 10 January 2005 (2005-01-10), pages 210-215, XP093062005,

## Description

### FIELD OF THE INVENTION

The present invention relates generally to lasers. More specifically, it relates to Titanium-doped sapphire lasers.

### BACKGROUND OF THE INVENTION

Lasers are at the core of a wide range of technologies, scientific research, and medical applications. Titanium-doped sapphire (Ti:Sapphire) laser is unique among other commercially available lasers due to its very wide gain bandwidth. This enables Ti:Sapphire laser to be used as a wide-range (up to 650-1100 nm) tunable coherent source, and, consequently, as a source of ultra-fast pulsed light. The Ti:Sapphire laser is an irreplaceable and very costly tool used for numerous industrial, biomedical, and research applications. The cost of a Ti:Sapphire laser, however, typically ranges between $30,000-200,000, excluding the pump laser. The pump laser for the Ti:Sapphire module is additionally $30,000-50,000. Moreover, such lasers occupy square meters of optical table surface. Therefore, the cost of Ti:Sapphire laser and its physical dimensions remain prohibitively large for wide-spread integration into equipment and devices, impeding further progress. An examplary Ti: Sapphire laser that is pumped by a frequency-doubled Nd:YLF laser is disclosed in US6836592 B2.

The prospect of miniaturization and integration of a Ti:Sapphire laser with on chip photonics would revolutionize the field of photonics and have a major impact on many applications, including two-photon microscopy in neuroscience; LIDAR systems where a pulsed source could also be integrated with beam-steering photonics on a single chip, thereby reducing the cost and size and enabling integration with other car sensors; and quantum photonics, where large scale Ti:Sapphire lasers are used to pump quantum emitters to generate single or entangled photon states for quantum information processing. However, up to now, the implementation of a pulsed laser source on chip has been persistently elusive.

### SUMMARY OF THE INVENTION

This description discloses a fully chip-integrated Ti:Sapphire laser producing ultrafast pulses, which can be driven by an inexpensive infrared diode as driving source. This architecture is a complete microscale Ti:Sapphire laser system, which could fit into a volume on the order of a cubic centimeter, and is thus fully portable (reduction of many orders of magnitude relative to state of the art). Apart from the reduction in size, there would also be orders of magnitude of reduction in cost - to order of $1000 or less for the whole system.

In one aspect, the invention provides a Ti:Sapphire laser device comprising: a substrate (such as quartz, glass, sapphire, or others); a first waveguide resonator composed of a gain medium integrated onto the substrate in a planar technology configuration; a frequency doubler composed of a second order nonlinear material integrated onto the substrate in a planar technology configuration and as a resonant or waveguiding component; a second waveguide resonator composed of a titanium doped sapphire gain medium integrated onto the substrate in a planar technology configuration; wherein the first waveguide resonator is optically coupled to the frequency doubler and is capable of producing laser radiation from pump diode light input to the Ti:Sapphire laser device; wherein the frequency doubler is optically coupled to the second waveguide resonator and is capable of producing frequency doubled radiation from the laser radiation.

In one implementation of the Ti:Sapphire laser device, the first waveguide resonator is a Nd:YVO₄ resonator or Nd:YAG resonator.

In one implementation of the Ti:Sapphire laser device, the frequency doubler comprises a SiC ring resonator that frequency doubles the laser radiation via a doubly resonant second-harmonic generation process. An alternative to SiC may be thin film lithium niobate resonator integrated on the same substrate.

In one implementation of the Ti:Sapphire laser device, the second waveguide resonator includes dispersion-engineered laser cavity mirrors.

In one implementation of the Ti:Sapphire laser device, the second waveguide resonator includes low-loss Kerr nonlinear mirror; and one broadband linear mirror and the Kerr nonlinear mirror form the second waveguide laser cavity.

In one implementation of the Ti:Sapphire laser device, the substrate is SiO₂ and the Ti:Sapphire laser has a device layer stack comprising YVO on SiO₂ on SiC on SiO₂ on Ti:Sapphire on the substrate.

In one example, the infrared diode pumps an integrated Nd:YVO₄ ring resonator, which produces narrow-band laser light at 1064 nm. The 1064 nm emission is routed onto a SiC ring resonator, which frequency-doubles it to 532 nm via doubly resonant efficient second harmonic generation process. The 532 nm light is routed to the Ti:Sapphire resonator. Combined with a commercial diode pump, the volume of the system is smaller than one cubic centimeter-many orders of magnitude smaller than the state of the art.

The full chip-scale integration of the laser system simultaneously shrinks the size, boosts efficiency, enables low-power operation, and dramatically drops the system costs.

### BRIEF DESCRIPTION OF THE DRAWINGS

**Fig. 1A****:** Schematic diagram illustrating the main components and structure of an integrated Ti:Sapphire laser device according to an embodiment of the invention.
**Fig. 1B****:** Conceptual figure representing on chip integrated Ti:Sapphire laser of size on the order of 100 µm. Combined with a commercial diode pump, its volume is smaller than one cubic centimeter - many orders of magnitude smaller than the state of the art.
**Fig. 1C****:** Conceptual figure representing Ti:Sapphire laser cavity including a Kerr nonlinear mirror.
**Fig. 2****:** A process flow for fabricating thin film Silicon Carbide on Insulator. This same approach can be used to transfer thin YVO films onto insulator, and thin Ti:Sapphire films onto insulator, thereby implementing the whole proposed circuit from **Fig. 1****.**
**Fig. 3****:** etched Sapphire waveguide showcasing low-pressure, low-roughness reactive ion etching method used to produce integrated sapphire photonic structures.

### DETAILED DESCRIPTION

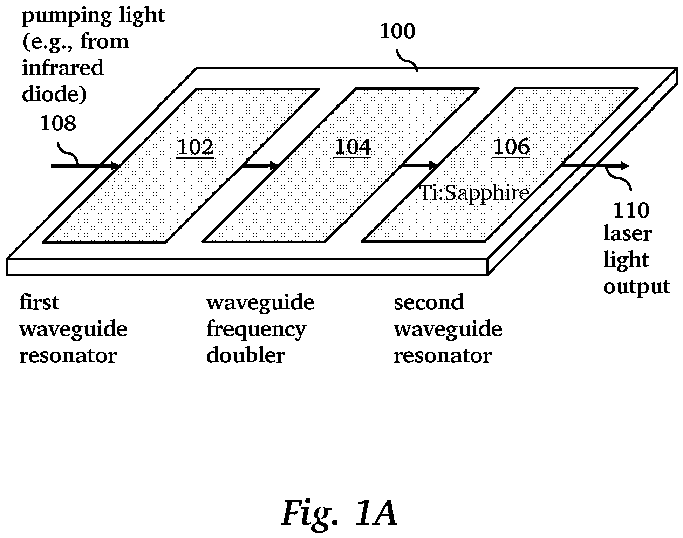

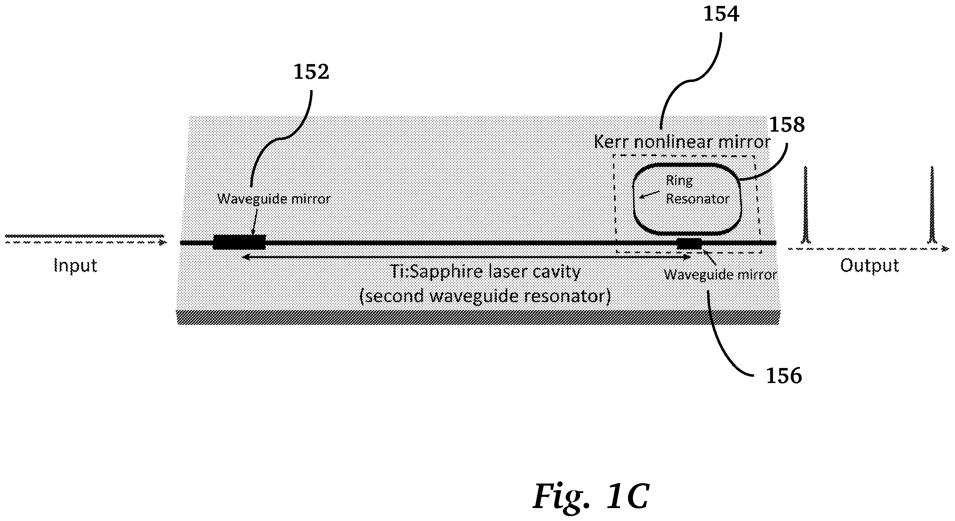

As illustrated in **Fig. 1A****,** an embodiment of the Ti:Sapphire laser device includes a substrate **100,** a first waveguide resonator **102** composed of a gain medium integrated onto the substrate in a planar technology configuration, a frequency doubler **104** composed of a second order nonlinear material integrated onto the substrate in a planar technology configuration, and a second waveguide resonator **106** composed of a titanium doped sapphire gain medium integrated onto the substrate in a planar technology configuration. The first waveguide resonator **102** is optically coupled to the frequency doubler **104** and is capable of producing laser radiation from pump diode light **108** input to the Ti:Sapphire laser device. The frequency doubler **104** is optically coupled to the second waveguide resonator **106** and is capable of producing frequency doubled radiation from the laser radiation. The Ti:Sapphire laser device outputs laser light **110** from the second waveguide resonator **106.**

This embodiment may be realized using various different material systems and resonator configurations. For example, the first waveguide resonator **102** may be a Nd:YVO₄ resonator or Nd:YAG resonator. The frequency doubler **104** may be a SiC ring resonator that frequency doubles the laser radiation via a doubly resonant second-harmonic generation process. The second waveguide resonator **106** preferably includes dispersion-engineered laser cavity mirrors.

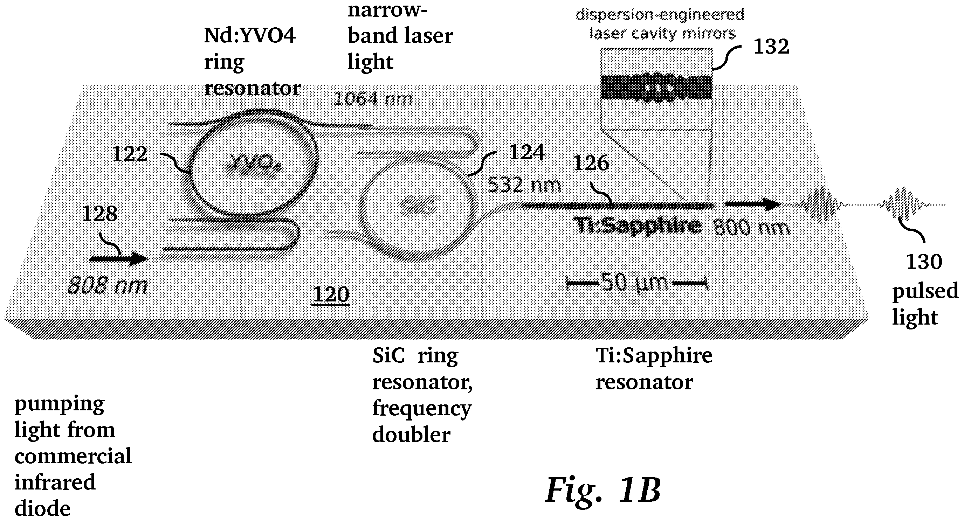

In one example shown in **Fig. 1B****,** light **128** generated from an infrared diode (not shown) is input to the device and pumps an integrated Nd:YVO₄ ring resonator **122,** which produces narrow-band laser light at 1064 nm. The 1064 nm emission is routed onto a SiC ring resonator **124,** which frequency-doubles it to 532 nm via doubly resonant efficient second harmonic generation process. The 532 nm light is routed to the Ti:Sapphire resonator **126.** The device outputs pulsed light **130.** Combined with a commercial diode pump, the volume of the system is smaller than one cubic centimeter-many orders of magnitude smaller than the state of the art.

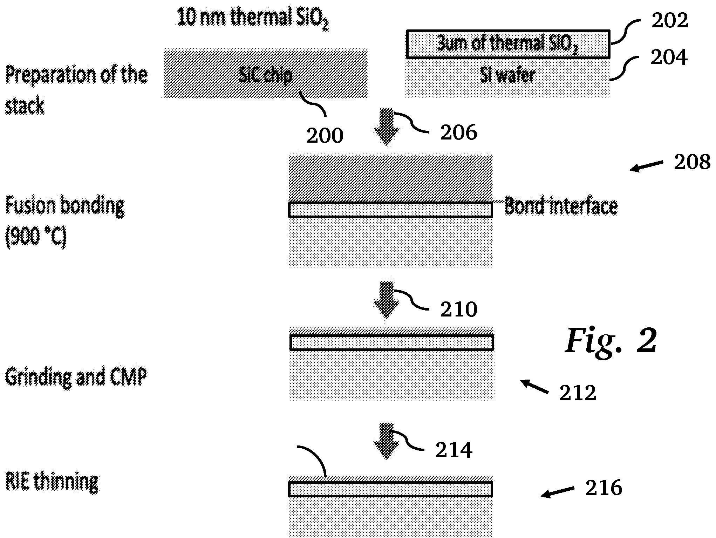

In one realization of the Ti:Sapphire laser device, the substrate is SiO₂ and the Ti:Sapphire laser has a device layer stack comprising YVO on SiO₂ on SiC on SiO₂ on Ti:Sapphire on the substrate. A technique for fabricating Silicon Carbide on Insulator devices has been disclosed in US patent application number 16/805073, published as US 2020/0279767 A1. The process flow for fabricating Silicon Carbide on Insulator is shown in **Fig. 2****,** and the process for YVO and Ti:Sapphire follow a very similar process. The techniques to implement thin film silicon carbide on insulator may be adapted to transfer thin YVO films onto insulator, and thin Ti:Sapphire films onto insulator. The process, as shown in **Fig. 2****,** begins with a substrate **202, 204** and bulk active material **200** (YVO or Ti:Sapphire). The substrate and active material are fusion bonded **206** to each other at a bond interface to form material **208.** Then, precision grinding **210** thins the material **212** down to thickness approximately 1 micron greater than target device thickness. Finally, chemical-mechanical polishing **214** removes the last several microns of material, simultaneously producing a surface with roughness better than 3 Angstroms RMS. The result is layered material **216.**

The modification of the technique for fabricating Silicon Carbide on Insulator devices disclosed in US patent application number 16/805073 enabling the extension of the technique to Sapphire is the use of a substrate with a matched thermal expansion coefficient: Fabrication of Ti:Sapphire on insulator with a Sapphire handle is used to prevent strain build-up that would result in cracking of the film during thinning and polishing. The versatility of this method enables the stacking of arbitrary layers of highly-pure crystalline materials. This is important for the implementation of on-chip Ti:Sapphire laser. The device layer stack for Ti:Sapphire laser in one embodiment is YVO on SiO₂ , SiC on SiO₂ , and Ti:Sapphire on SiO₂. The integration of these materials together can be done via bonding them side by side on a chip and using low-loss vertically coupled waveguide interconnects to route light between the different stages of the device.

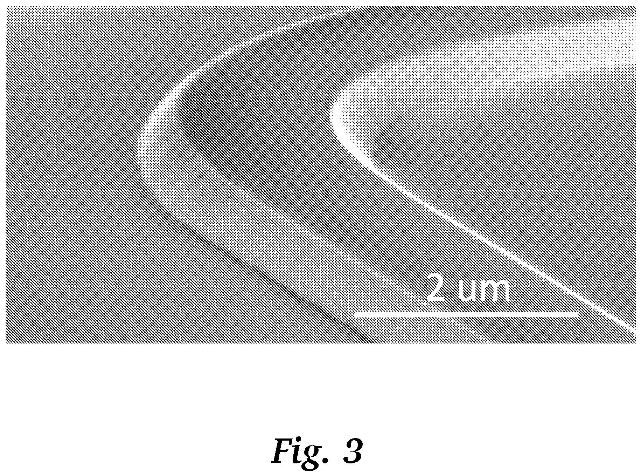

Sapphire is one of the most difficult dielectric materials to process for patterning nanostructures. We developed a fabrication technique based on photolithography and reactive-ion-etching for low-roughness sapphire etching with good selectivity against photoresist, to enable fabrication of high quality structures in Sapphire. The fabrication is done via utilizing inductively coupled plasma (ICP). In particular, we utilize chemically reactive ions for sapphire, such as BCl₃ and/or Cl₂, which helps to provide fast and smooth etch. Furthermore, utilizing etch operation under low pressure (e.g., 0.1-0.5 mTorr) condition with high bias (e.g., 400-800 V) and Ar ions, we are also combining ion-induced etching, which further improves etching conditions. With such etching technique, we are able to define waveguide and resonator structures in sapphire simultaneously maintaining a selectivity of 0.3 against photoresist while minimizing redeposition during etch. Redeposition during etching is particularly harmful to low-roughness sidewalls. Finally, partial etching into sapphire, thereby not exposing SiO₂ underlayer, allows removal of redeposition via dilute Hydrofluoric acid, producing photonic structures entirely without etch redeposition, shown in **Fig. 3****.**

The Ti:Sapphire laser device preferably includes dispersion-engineered laser cavity mirrors in the second waveguide resonator. This can be done via a traditional ring resonator approach (e.g., Nature Photonics, 10, 316 - 320 (2016)), or via dispersion engineered reflectors The cavity dispersion is one of key parameters that determine temporal width and spectral shape of the pulsed laser output. Precise fabrication technique (**Figs. 2** **and** **3**) and various photonic designs enable broadband dispersion control. Such dispersion engineering techniques (e.g., see Optics Letters 19, 3, 201 - 203 (1994)) may be implemented in this laser device and provide a key role to generate broad bandwidth pulse. Photonic inverse design methods may be used to implement optimal dispersion engineering. Spectral bandwidth of pulse laser is important key metric for microscopy, spectroscopy, optical clock, and particle accelerator applications.

In one embodiment, shown in **Fig**. **1C**, the Ti:Sapphire laser device includes low-loss Kerr nonlinear mirror **154** in the second waveguide resonator. The second waveguide resonator is formed using the Kerr nonlinear mirror **154** and one traditional mirror **152.** A mode locked laser generally requires a device that provides higher gain for short pulses and enable a self-starting laser (turnkey operation). Free-space mode-locked laser uses semiconductor saturable absorber, Kerr lens, polarization rotator, and many more (e.g., see IEEE Journal of Selected Topics in Quantum Electronics, 6, 6, 1173 - 1185 (2000)). However, traditional devices are either non-integrable or cause high loss, low damage threshold, and narrow operation bandwidth. The Kerr nonlinear mirror has a broadband linear waveguide mirror **156** and microring resonator **158.** The ring resonator is placed next to the waveguide mirror (e.g., see Nature Photonics, 14, 369 - 374 (2020)). Alternatives of the ring resonator would be photonic crystal resonator or another waveguide resonator. The integrated Kerr nonlinear mirror shows higher reflectivity for short pulses with low insertion loss, broad operation bandwidth, and high damage threshold. The device is implemented in this laser device (Ti:Sapphire second waveguide resonator) and enables a self-starting operation of mode-locked laser. Low-loss operation of the Kerr nonlinear mirror enables high peak power of pulsed laser.

The miniaturized and inexpensive Ti:Sapphire laser provided by the present invention may be integrated with on chip photonics and has many applications, such as the following.
1) A low-cost, compact, integratable solution for two-photon microscopy in medical research and neuroscience.
2) LIDAR systems where a pulsed Ti: Sapphire source could also be integrated with beam-steering photonics on a single chip, thereby reducing the cost and size and enabling integration with other car sensors.
3) Optical clocks of unprecedented precision, where frequency-stabilized Ti:Sapphire laser would synthesize a microwave clock signal from atomic or ion transition frequency in an optical trap.
4) Dual-comb spectroscopy - a monolithically integrated, short-acquisition-time solution for high spectral resolution spectroscopy, fully miniaturized.
5) Ultrastable terahertz- and radio- frequency signal generation where Ti:Sapphire mode-locked laser could be used to produce a spectrally pure micro- or terahertz- signal at the frequency of pulse repetition rate, with spectroscopy and imaging applications.
6) Laser-driven dielectric particle accelerators on chip, which are crucial building blocks of on chip X- ray sources which would revolutionize medical applications.
7) Integrated quantum photonics devices. Currently, on-chip quantum photonic devices being developed for quantum computation and quantum repeaters employ large scale Ti:Sapphire lasers to pump the quantum emitters with ultra-fast pulses. Generation of high purity single or entangled photon states for quantum information processing in a compact platform thus requires a compact ultra-fast source.

## Claims

1. A Ti:Sapphire laser device comprising:
a substrate (100, 120);
a first waveguide resonator (102, 122) composed of a gain medium integrated onto the substrate in a planar technology configuration;
a frequency doubler (104, 124) composed of a second order nonlinear material integrated onto the substrate in a planar technology configuration;
a second waveguide resonator (106, 126) composed of a titanium doped sapphire gain medium integrated onto the substrate in a planar technology configuration;
wherein the first waveguide resonator is optically coupled to the frequency doubler and is capable of producing laser radiation from pump diode light input to the Ti:Sapphire laser device;
wherein the frequency doubler is optically coupled to the second waveguide resonator and is capable of producing frequency doubled radiation from the laser radiation.

2. The Ti:Sapphire laser device of claim 1 wherein the first waveguide resonator is a Nd:YVO₄ resonator or Nd:YAG resonator.

3. The Ti:Sapphire laser device of claim 1 wherein the frequency doubler comprises a SiC ring resonator (124) that frequency doubles the laser radiation via a doubly resonant second-harmonic generation process.

4. The Ti: Sapphire laser device of claim 1 wherein the frequency doubler comprises a thin film lithium niobate resonator.

5. The Ti:Sapphire laser device of claim 1 wherein the second waveguide resonator (126) includes dispersion-engineered laser cavity mirrors (132).

6. The Ti:Sapphire laser device of claim 1 wherein the second waveguide resonator includes a low-loss Kerr nonlinear mirror and one broadband linear mirror.

7. The Ti:Sapphire laser device of claim 1 wherein the substrate is SiO₂ and the Ti:Sapphire laser has a device layer stack comprising YVO on SiO₂ on SiC on SiO₂ on Ti:Sapphire on the substrate.

8. The Ti:Sapphire laser device of claim 1 wherein the substrate is quartz, glass, or sapphire.

## Patentansprüche

1. Ti:Saphir-Laservorrichtung, umfassend:
ein Substrat (100, 120);
einen ersten Wellenleiterresonator (102, 122), der aus einem Verstärkungsmedium besteht, das in einer Planartechnologie-Konfiguration auf dem Substrat integriert ist;
einen Frequenzverdoppler (104, 124), der aus einem nichtlinearen Material zweiter Ordnung besteht, das in einer Planartechnologie-Konfiguration auf dem Substrat integriert ist;
einen zweiten Wellenleiterresonator (106, 126), der aus einem mit Titan dotierten Saphir-Verstärkungsmedium besteht, das in einer Planartechnologie-Konfiguration auf dem Substrat integriert ist;
wobei der erste Wellenleiterresonator mit dem Frequenzverdoppler optisch gekoppelt und in der Lage ist, Laserstrahlung aus dem in das Ti:Saphir-Laservorrichtung eingegebenen Pumpdiodenlicht zu erzeugen;
wobei der Frequenzverdoppler mit dem zweiten Wellenleiterresonator optisch gekoppelt und in der Lage ist, aus der Laserstrahlung frequenzverdoppelte Strahlung zu erzeugen.

2. Ti:Saphir-Laservorrichtung nach Anspruch 1, wobei der erste Wellenleiterresonator ein Nd:YVO₄ -Resonator oder Nd:YAG-Resonator ist.

3. Ti:Saphir-Laservorrichtung nach Anspruch 1, wobei der Frequenzverdoppler einen SiC-Ringresonator (124) umfasst, der die Laserstrahlung über einen doppelt resonanten Frequenzverdopplungsprozess frequenzverdoppelt.

4. Ti:Saphir-Laservorrichtung nach Anspruch 1, wobei der Frequenzverdoppler einen Dünnschicht-Lithiumniobat-Resonator umfasst.

5. Ti:Saphir-Laservorrichtung nach Anspruch 1, wobei der zweite Wellenleiterresonator (126) Laserhohlraumspiegel (132) mit angepasster Dispersion umfasst.

6. Ti:Saphir-Laservorrichtung nach Anspruch 1, wobei der zweite Wellenleiterresonator einen verlustarmen nichtlinearen Kerr-Spiegel und einen breitbandigen linearen Spiegel umfasst.

7. Ti:Saphir-Laservorrichtung nach Anspruch 1, wobei das Substrat SiO₂ ist und der Ti:Saphir-Laser einen Vorrichtungsschichtstapel aufweist, der YVO auf SiO₂ auf SiC auf SiO₂ auf Ti:Saphir auf dem Substrat umfasst.

8. Ti:Saphir-Laservorrichtung nach Anspruch 1, wobei das Substrat aus Quarz, Glas oder Saphir besteht.

## Revendications

1. Dispositif laser à Ti:Saphir comprenant :
un substrat (100, 120) ;
un premier résonateur à guide d'ondes (102, 122) composé d'un milieu de gain intégré sur le substrat dans une configuration de technologie plane ;
un doubleur de fréquence (104, 124) composé d'un matériau non linéaire du second ordre intégré sur le substrat dans une configuration de technologie plane ;
un second résonateur de guide d'ondes (106, 126) composé d'un milieu de gain en saphir dopé au titane intégré sur le substrat dans une configuration de technologie plane ;
dans lequel le premier résonateur de guide d'ondes est couplé optiquement au doubleur de fréquence et est capable de produire un rayonnement laser à partir d'une entrée de lumière de diode de pompe vers le dispositif laser à Ti:Saphir ;
dans lequel le doubleur de fréquence est couplé optiquement au second résonateur de guide d'ondes et est capable de produire un rayonnement doublé en fréquence à partir du rayonnement laser.

2. Dispositif laser à Ti:Saphir selon la revendication 1, dans lequel le premier résonateur de guide d'ondes est un résonateur Nd:YVO₄ ou un résonateur Nd:YAG.

3. Dispositif laser à Ti:Saphir selon la revendication 1, dans lequel le doubleur de fréquence comprend un résonateur annulaire en SiC (124) dont la fréquence double le rayonnement laser via un processus de génération de seconde harmonique à double résonance.

4. Dispositif laser à Ti:Saphir selon la revendication 1, dans lequel le doubleur de fréquence comprend un résonateur de niobate de lithium à couche mince.

5. Dispositif laser à Ti:Saphir selon la revendication 1, dans lequel le second résonateur à guide d'ondes (126) comprend des miroirs à cavité laser à dispersion (132).

6. Dispositif laser à Ti:Saphir selon la revendication 1, dans lequel le second résonateur à guide d'ondes comprend un miroir non linéaire de Kerr à faibles pertes et un miroir linéaire à large bande.

7. Dispositif laser à Ti:Saphir selon la revendication 1, dans lequel le substrat est SiO₂ et le laser à Ti:Saphir a un empilement de couches de dispositif comprenant YVO sur SiO₂ sur SiC sur SiO₂ sur Ti:Saphir sur le substrat.

8. Dispositif laser à Ti:Saphir selon la revendication 1, dans lequel le substrat est du quartz, du verre ou du saphir.
